# EUROPÄISCHE PATENTSCHRIFT

(11) **EP 2 145 133 B1**
(45) Veröffentlichungstag und Bekanntmachung des Hinweises auf die Patenterteilung: **06.07.2011**
(21) Anmeldenummer: 08749824.2
(22) Anmeldetag: 29.04.2008
(51) Int. Cl.: F24C 15/20, F16B 12/20

(54) **BEFESTIGUNGSVORRICHTUNG ZUR BEFESTIGUNG VON GEGENSTÄNDEN AN EINER GRUNDFLÄCHE**
FASTENING DEVICE FOR FASTENING OBJECTS TO A BASE SURFACE
DISPOSITIF DE FIXATION D'OBJETS À UNE SURFACE DE BASE

(30) Priorität: 09.05.2007 DE 102007021731
(43) Veröffentlichungstag der Anmeldung: 20.01.2010
(73) Patentinhaber: BSH Bosch und Siemens Hausgeräte GmbH, 81739 München (DE)
(72) Erfinder: METZ, Daniel, 76689 Karlsdorf-Neuthard (DE); UEBELE, Volkmar, 61231 Bad Nauheim (DE)
(86) Internationale Anmeldenummer: PCT/EP2008/055203
(87) Internationale Veröffentlichungsnummer: WO 2008/138741

(56) Entgegenhaltungen:
- CN-A- 1 888 577
- DE-A1- 2 942 946
- DE-A1- 19 519 954
- DE-U1- 9 217 140
- DE-U1- 9 311 681
- FR-A- 2 744 847
- JP-A- 2007 236 969

## Beschreibung

Die Erfindung betrifft eine Befestigungsvorrichtung zur Befestigung von Gegenständen, insbesondere eines Dunstabzugsgehäuses einer Dunstabzugshaube, an einer Grundfläche. Ferner betrifft die Erfindung die Verwendung einer derartigen Befestigungsvorrichtung.

Befestigungsvorrichtungen dienen zur Befestigung von Gegenständen an einer Grundfläche. Die Grundfläche kann Teil eines Gebäudes, ein Teil einer Wand, einer Decke, einer Säule, eines Gerüstes oder dergleichen sein.

Es können alle möglichen Gegenstände, insbesondere schwere Gegenstände, durch eine Befestigungsvorrichtung an einer Grundfläche befestigt werden. So können die Gegenstände beispielsweise elektronische Geräte, wie Flachbildfernseher, Küchengeräte, Möbel, etc., sein. Diese werden an entsprechenden Grundflächen, wie beispielsweise Zimmerwänden, befestigt.

So wird beispielsweise ein Dunstabzugsgehäuse einer Dunstabzugshaube mittels Schrauben, die durch Öffnungen in der Rückwand und/oder einer Seitenwand des Dunstabzugsgehäuses eingeführt werden, an einer Wand, insbesondere einer Gebäudewand oder Raumwand, befestigt. Die Schrauben werden dazu in der Regel in Dübel, die in die Wand eingebracht werden, eingeschraubt. Es ist ferner zur Befestigung eines Dunstabzugsgehäuses einer Dunstabzugshaube bekannt, das Dunstabzugsgehäuse an Haltehaken aufzuhängen.

Nachteilig ist bei derartigen Befestigungen, dass die Montage und die Ausrichtung der Gegenstände aufwendig sind. Bei einer einfachen Befestigung mittels Schrauben ist zudem eine nachträgliche Ausrichtung der Gegenstände nicht möglich.

Eine gattungsgemäße Befestigungsvorrichtung für Gehäuse von elektrischen Geräten ist in der FR 2744847 A1 gezeigt. Der Gegenstand dieser Druckschrift weist zur Höheneinstellung einen Exzenter auf, der mittels einer Sicherungsmutter in seiner Lage fixierbar ist.

Aufgabe der vorliegenden Erfindung ist es, eine Befestigungsvorrichtung zur Befestigung von Gegenständen, insbesondere schweren Gegenständen, wie eines Dunstabzugsgehäuses einer Dunstabzugshaube, an einer Grundfläche zu schaffen, durch die die Befestigung der Gegenstände sehr einfach, insbesondere fast ohne die Zuhilfenahme von Werkzeug, möglich ist. Ferner soll durch die Befestigungsvorrichtung der zu befestigende Gegenstand sehr leicht an der Grundfläche ausgerichtet werden können.

Der Erfindung liegt die Erkenntnis zugrunde, dass diese Aufgabe ideal durch eine Befestigungsvorrichtung bzw. durch die Verwendung einer Befestigungseinrichtung zur Befestigung von Gegenständen, insbesondere eines Dunstabzugsgehäuses einer Dunstabzugshaube, an einer Grundfläche gelöst werden kann, wobei die Befestigungsvorrichtung eine in ihrer Lage verstellbaren Abschnitt einer Aufnahmenut umfasst, um wenigstens einen Bereich des Gegenstandes zu halten.

Merkmale und Details die im Zusammenhang mit der Befestigungsvorrichtung beschrieben sind gelten dabei selbstverständlich auch im Zusammenhang mit der Verwendung einer derartigen Befestigungsvorrichtung und umgekehrt.

Die Aufgabe wird daher erfindungsgemäß durch eine Befestigungsvorrichtung zur Befestigung von Gegenständen, insbesondere eines Dunstabzugsgehäuses einer Dunstabzugshaube, an einer Grundfläche, gelöst, die einen Dorn zur Befestigung an der Grundfläche, einen Exzenter, der verdrehbar an dem Dorn angeordnet ist, und eine Aufnahmenut zur Aufnahme wenigstens eines Bereiches des Gegenstandes, die zumindest bereichsweise durch die Außenmantelfläche des Exzenters gebildet ist, aufweist, wobei die Befestigungsvorrichtung eine Kappe aufweist, die form- und/oder kraftschlüssig an dem Exzenter befestigbar ist, wobei die Kappe einen Aushängeschutz für die Rückwand und einen Verdrehschutz für den Exzenter bildet.

Als Grundfläche wird im Lichte der Erfindung jede Fläche angesehen, an der die Befestigungsvorrichtung befestigt werden kann. Die Fläche muss nur unwesentlich größer, als die Befestigungsvorrichtung selbst sein. Dabei muss die Grundfläche derart ausgebildet sein, dass sie die Befestigungsvorrichtung stoff- und/oder kraftschlüssig halten kann. So kann die Grundfläche Teil eines Gebäudes, einer Gebäudewand oder Schrankwand, einer Decke, einer Säule, eines Gerüstes oder dergleichen sein.

Die zu befestigenden Gegenstände können sehr vielfältig sein. So können insbesondere elektronische Geräte, wie ein Flachbildschirm oder Küchengeräte, wie Dunstabzugshauben, durch die Befestigungsvorrichtung befestigt werden. Ferner können die Gegenstände auch als Möbelstück oder dergleichen ausgebildet sein. Insbesondere verkleidete Gegenstände lassen sich bevorzugt mit einer derartigen Befestigungsvorrichtung befestigen, wenn die Befestigungsvorrichtung nach Anbringung der Verkleidung der Gegenstände nicht sichtbar ist.

So kann bevorzugt ein Dunstabzugsgehäuse einer Dunstabzugshaube an einer Grundfläche, wie einer Zimmerwand, befestigt werden. Die Befestigung des Dunstabzugsgehäuses ist nach dem Anbringen der Verkleidung der Dunstabzugshaube nicht mehr sichtbar.

Die Befestigungsvorrichtung weist einen Dorn auf, der an der Grundfläche befestigt werden kann. Die Befestigung des Doms an der Grundfläche kann dabei verschiedenartig ausgebildet sein. Das heißt, die Befestigung kann stoff- und/oder kraftschlüssig erfolgen. So kann der Dorn an der Grundfläche angeschweißt, angeklebt oder bevorzugst angeschraubt werden. Hierzu muss der Dorn lediglich eine anschweißbare, verklebbare oder verschraubbare Fläche aufweisen. Die Befestigungsvorrichtung weist ferner einen Exzenter auf, der verdrehbar an dem Dorn angeordnet ist. Dabei ist der Exzenter derart an dem Dorn angeordnet, dass die Längsachse des Dorns und die Drehachse des Exzenters koaxial zueinander liegen. Die Mittelachse des hohlprofilförmigen Exzenters ist parallel zur Drehachse des Exzenters bzw. zur Mittelachse des Dorns in einem bestimmten Abstand angeordnet. Der Exzenter stellt ein exzentrisch gelagertes Gebilde dar, welches verdrehbar an dem Dorn angeordnet ist. Der Exzenter weist eine hohlprofilförmige Form zur Aufnahme des Doms auf. Der Exzenter wandelt eine Dreh- in eine Hubbewegung quer zur Drehachse um.

Die Befestigungsvorrichtung weist ferner eine Aufnahmenut zur Aufnahme wenigstens eines Bereiches des Gegenstandes, die zumindest bereichsweise durch die Außenmantelfläche des Exzenters gebildet ist, auf. In die gebildete Aufnahmenut kann, insbesondere formschlüssig, ein entsprechender Bereich bzw. ein entsprechendes Teil des zu befestigenden Gegenstandes eingeführt werden. Der Bereich des zu befestigenden Gegenstandes kann beispielsweise ein Halteblech bzw. ein Wandelement oder ein Gehäuseelement sein. Dieser Bereich wird in der Aufnahmenut zum einen durch die Abmessung der Aufnahmenut, insbesondere deren Breite, die der Dicke des Bereiches entspricht, gehalten. Zum anderen wirkt die Gewichtskraft des Gegenstandes, dessen bereich in die Aufnahmenut eingebracht wurde, so, dass der Bereich in der Aufnahmenut gehalten wird. Die Aufnahmenut hält den in die Aufnahmenut eingeführten Bereich des Gegenstandes und damit den Gegenstand somit sicher an der Befestigungsvor-richtung. Der Gegenstand kann daher sehr einfach, fast ohne zusätzliches Werkzeug, durch die Befestigungsvorrichtung an einer Grundfläche befestigt werden kann.

Durch eine Drehung des Exzenters kann die Lage des Abschnitts der Aufnahmenut, in dem der Bereich des Gegenstandes gehalten ist, verändert werden, so dass der gehaltene Gegenstand vertikal ausgerichtet werden kann. Je nach Stärke der Exzentrizität des Exzenters kann der befestigte Gegenstand mehr oder weniger stark vertikal an der Grundfläche ausgerichtet werden. Der Exzenter wird vor dem Einführen des Gegenstandes an der Aufnahmenut vorzugsweise derart um den Dorn verdreht, dass der Abschnitt der Aufnahmenut, in dem der Bereich des Gegenstandes in dieser aufgenommen wird, durch eine Drehung des Exzenters näher in Richtung der Drehachse oder weiter weg von der Drehachse des Exzenters bewegt werden kann. Ausgehend von dieser Ausgangsposition des Exzenters, ist durch eine Drehung des Exzenters somit ein Anheben oder ein Absenken des in der Aufnahmenut gehaltenen Gegenstandes möglich. Die Ausrichtung der Aufnahmenut bzw. des befestigten Gegenstandes kann manuell, d.h. durch Greifen und Drehen des Exzenters, erfolgen. Ferner kann der Gegenstand horizontal entlang der Aufnahmenut verschoben werden. Inwieweit der Gegenstand horizontal verschoben werden kann, hängt von dem Gegenstand selbst ab, insbesondere von der Breite der Aussparungen in dem Gegenstand.

Die Aufnahmenut wird zumindest bereichsweise durch die Außenmantelfläche des Exzenters gebildet. Die Außenmantelfläche wird im Lichte der Erfindung durch die Außenseite des Exzenters gebildet. Dabei wird auch eine Stirnfläche, die durch eine Abwinkelung an der Außenseite gebildet ist, als Teil der Außenmantelfläche verstanden. Die Aufnahmenut kann beispielsweise durch einen Bereich der Außenmantelfläche des Exzenters und durch die Grundfläche, an der die Befestigungsvorrichtung befestigt ist, gebildet werden. Durch die Befestigung der Befestigungsvorrichtung an einer Grundfläche wird beispielsweise eine radial ausgerichtete Aufnahmenut gebildet, deren Flanken durch einen Bereich der Stirnseite der Außenmantelfläche des Exzenters und durch die Grundfläche gebildet werden. Der Boden der Aufnahmenut ist bevorzugt durch die Außenmantelfläche des Exzenters, insbesondere durch einen Absatz an der Stirnseite, gebildet. Ferner ist denkbar, dass die Aufnahmenut durch die Außenmantelfläche des Exzenters und eine Unterlegscheibe, durch deren Bohrung der Dorn an der Grundfläche befestigt worden ist, gebildet wird. Eine derartige Befestigung des Gegenstandes in der Aufnahmenut hat den Vorteil, dass die Grundfläche durch den eingeführten Gegenstand nicht beschädigt wird. Weiterhin ist es auch möglich, dass die Aufnahmenut in den äußeren Umfang des Exzenters, insbesondere in der Nähe einer der Stirnseiten des Exzenters eingebracht ist.

Je nach der Größe und Material der Befestigungsvorrichtung können leichte oder schwere Gegenstände fast ohne Werkzeug an einer Grundfläche befestigt werden. Lediglich die Befestigungsvorrichtung wird an der Grundfläche befestigt. Die Befestigungsvorrichtung, d.h. der Dorn und der Exzenter, ist bevorzugt derart groß und aus einem Material hoher Festigkeit beziehungsweise Stabilität ausgebildet, dass schwere Gegenstände, wie beispielsweise das Dunstabzugsgehäuse einer Dunstabzugshaube, an der Grundfläche, d.h. an einer Zimmerwand, einer Schrankwand oder einer Befestigungsplatte befestigt und durch die Befestigungsvorrichtung gehalten werden können. Der Dorn und der Exzenter können beispielsweise aus Kunststoff oder Metall hergestellt sein.

Der Exzenter ist vorzugsweise untrennbar exzentrisch mit dem Dorn verbunden. Besonders bevorzugt besteht zwischen dem Exzenter und dem Dorn ein Reibschluss. Dabei ist der Exzenter nur unter einem gewissen Kraftaufwand um den Dorn drehbar. Der Dorn und der Exzenter sind bevorzugt aus einem harten Kunststoff ausgebildet. Dabei sind diese bevorzugt durch ein so genanntes "hart/hart" bzw. "hart auf hart" Spritzgießverfahren untrennbar aneinandergefügt. Hierzu werden als Metallersatzmaterial spezielle hochtemperaturfeste Kunststoffe verwendet. Bei der Herstellung der Befestigungsvorrichtung kann der Dorn oder der Exzenter als Vorspritzling genutzt werden. Dient der Dorn als Vorspritzling, wird der Exzenter auf den Dorn gespritzt. Wenn der Exzenter als Vorspritzling dient, wird der Dorn in den Exzenter hineingespritzt. Dabei werden Dorn und Exzenter formschlüssig aneinander befestigt. Nur eine Drehung des Exzenters unter einem gewissen Kraftaufwand, das heißt bei Überwindung des Reibschlusses, bleibt möglich.

Bevorzugt ist eine Befestigungsvorrichtung, bei der die Aufnahmenut in der Außenmantelfläche des Exzenters über zumindest einen Bereich des Umfangs vorgesehen ist. Die Aufnahmenut ist dabei bevorzugt als Radialnut ausgebildet. Die Aufnahmenut kann über einen Bereich beziehungsweise Abschnitt des Umfangs oder über den gesamten Umfang, d.h. umlaufend, verlaufen. Es ist auch möglich, dass mehrere Aufnahmenute entlang des Umfanges der Außenmantelfläche angeordnet sind. Die Aufnahmenut wird in dieser Ausführungsform der Befestigungsvorrichtung ausschließlich durch den Exzenter gebildet. Dies hat den Vorteil, dass die Aufnahmenut bei der Herstellung des Exzenters einfach erzeugt und deren Breite eingestellt werden kann. Ferner wird die Grundfläche, an der die Befestigungsvorrichtung befestigt wird, bei der Einführung des zumindest einen Teils des zu befestigenden Gegenstandes geschont. Der befestigte Gegenstand muss nicht zwangsläufig beabstandet von der Grundfläche befestigt sein. So kann der Bereich des Gegenstandes, der durch die Befestigungsvorrichtung an der Grundfläche befestigt wird nach Innen versetzt an dem Gegenstand angeordnet sein. D.h., je nach Form des Gegenstandes kann der Gegenstand direkt an der Grundfläche anliegen, obwohl die Befestigung des Gegenstandes beabstandet von der Grundfläche erfolgt. Wenn der befestigte Gegenstand nachträglich verkleidet wird, spielt die beabstandete Befestigung des Gegenstandes an der Grundfläche in der Regel keine nachteilige Rolle.

In einer anderen bevorzugten Ausführungsform der Befestigungsvorrichtung ist vorgesehen, dass der Dorn der Befestigungsvorrichtung eine Grundplatte aufweist. Die Grundplatte bildet zusammen mit zumindest einem Bereich der Außenmantelfläche des Exzenters die Aufnahmenut. Der Dorn ragt senkrecht aus der Grundplatte hervor. Die Grundplatte bildet somit eine Verstärkung des Dorns. Die Grundplatte vergrößert die Fläche, die zur Befestigung des Doms an der Grundfläche zur Verfügung steht. So kann die Grundplatte stoff- und/oder kraftschlüssig, insbesondere durch eine Schweißverbindung und/oder eine Schraubenverbindung, an der Grundfläche befestigt werden. Die Grundplatte des Doms kann zur kraftschlüssigen Befestigung an der Grundfläche mehrere Bohrungen aufweisen, durch die Schrauben geführt werden können. Es ist des Weiteren möglich, dass die Grundplatte über Rastelemente an der Grundfläche befestigt wird. Die Grundplatte ist dabei derart groß ausgebildet, dass diese mit zumindest einem Bereich der Außenmantelfläche des Exzenters die Aufnahmenut bilden kann. Insbesondere bildet hierbei ein Bereich der Stirnfläche der Außenmantelfläche des Exzenters eine Flanke der Aufnahmenut, während die andere Flanke der Aufnahmenut durch die Grundplatte gebildet wird. Bei dieser Befestigung wird die Grundfläche, an der die Befestigungsvorrichtung befestigt wird, geschont. Zudem ist auch bei dieser Ausführungsform die Breite der Aufnahmenut bereits bei der Herstellung der Befestigungsvorrichtung einstellbar.

Besonders vorteilhaft ist eine Befestigungsvorrichtung, bei der sowohl der Dorn als auch der Exzenter einen Durchlass zur Hindurchführung einer Befestigungsschraube aufweisen. Der Durchlass kann durch Bohren in den Exzenter und den Dorn eingebracht werden. Vorzugsweise werden diese aber bei der Herstellung des Dorns und des Exzenters, beispielsweise bei dem Spritzgießen dieser Teile gebildet. Dabei sind die Durchlässe des Doms und des Exzenters konzentrisch zueinander angeordnet, so dass eine Schraube durch die beiden Durchlässe hindurchgeführt werden kann, um in einer entsprechenden Aufnahme in der Grundfläche eingeschraubt zu werden. Nur für das Einschrauben der Schraube in die entsprechende Aufnahme muss ein Werkzeug verwendet werden. Danach kommt kein Werkzeug mehr zum Einsatz. Eine derartige Ausgestaltung der Befestigungsvorrichtung ermöglicht eine besonders einfache und schnelle Befestigung der Befestigungsvorrichtung an der Grundfläche. Ferner können die Durchlässe relativ groß ausgebildet sein, so dass durch eine entsprechend große Schraube eine sichere Befestigung der Befestigungsvorrichtung an der Grundfläche gewährleistet ist. Die Durchlässe in dem Dorn bzw. in dem Exzenter verlaufen dabei bevorzugt koaxial zur Längsachse des Doms bzw. zur Drehachse des Exzenters. Eine derartige Befestigung der Befestigungsvorrichtung an der Grundfläche, d.h. beispielsweise an einer Wand, hat neben der sicheren Befestigung den Vorteil, dass die Befestigung von außen nicht gesehen werden kann, da die in die Durchlässe eingeführte Befestigungsschraube in die Durchlässe zumindest teilweise versenkt sein kann. Eine solche versenkte Befestigungsschraube kann durch die Einführung eines Schraubenschlüssels durch die Durchlässe einfach von der Grundfläche gelöst werden.

Der Dorn der Befestigungsvorrichtung weist bevorzugt wenigstens einen Rastvorsprung zum formschlüssigen Hintergreifen wenigstens einer Kante an der Innenmantelfläche des Exzenters auf. Hierdurch ist der Exzenter sicher an dem Dorn angeordnet. Eine axiale Bewegung des Exzenters entlang der Längsachse des Doms ist dadurch in eine Richtung unmöglich. Eine axiale Bewegung des Exzenters in die entgegen gesetzte Richtung entlang der Längsachse des Dorns wird entweder durch einen weiteren Rastvorsprung zum formschlüssigen Hintergreifen einer zweiten Kante an der Innenmantelfläche des Exzenters oder durch die Grundplatte des Dorns verhindert. Bevorzugt ist ein Bereich der Innenmantelfläche des Exzenters formschlüssig zwischen einem Rastvorsprung des Doms und der Grundplatte des Doms angeordnet. Dies gewährleistet, dass der Exzenter nur verdrehbar an dem Dorn gelagert ist. Die Kante an der Innenmantelfläche des Exzenters verläuft bevorzugt senkrecht zu der Drehachse des Exzenters. Die Kante kann aber auch geneigt zu der Drehachse des Exzenters verlaufen. Als Innenmantelfläche des Exzenters wird hierbei die Wand des Exzenters bezeichnet, die die Drehachse des Exzenters umgibt.

Die Außenmantelfläche des Exzenters der Befestigungsvorrichtung ist vorteilhafterweise kegelstumpfförmig ausgebildet. Hierdurch kann nach der Befestigung der Befestigungsvorrichtung an einer Grundfläche leicht eine Aussparung in dem wenigstens einem Bereich des Gegenstandes, insbesondere eine Aussparung mit einer horizontal ausgerichteten Oberkante, über den Exzenter aufgesteckt beziehungsweise aufgeschoben und die Aussparung bzw. die horizontal ausgerichtete Oberkante der Aussparung in die Aufnahmenut eingeführt werden. Die Außenmantelfläche des Exzenters weist vorteilhafter Weise eine geringe Neigung der Kegelfläche auf. Dies verhindert, dass ein nicht ordnungsgemäß befestigter Gegenstand leicht von der Befestigungsvorrichtung abrutscht. Eine derartige Exzenterform verhindert somit ein Herabfallen des Gegenstandes bei einem fehlerhaften Befestigen oder während der Befestigung.

Bevorzugt ist ferner eine Befestigungsvorrichtung, bei der der Exzenter wenigstens eine geneigt, insbesondere senkrecht, zur Drehachse des Exzenters verlaufende Bohrung aufweist. Auch diese Bohrung kann durch Bohren in den Exzenter eingebracht sein. Alternativ kann die Bohrung bei der Herstellung des Exzenters beispielsweise beim Spritzgiessen hergestellt beziehungsweise ausgespart werden. Die Bohrung kann als Aufnahme für einen Hebel genutzt werden, um den Exzenter zu drehen. So kann beispielsweise ein Schraubenzieher in die Bohrung eingeführt werden, um durch die Hebelkraft des Schraubenziehers den schwerfällig verdrehbaren Exzenter zu verdrehen. Insbesondere bei schweren Gegenständen, die über die Befestigungsvorrichtung an der Wand befestigt werden, ist das Vorsehen einer zur Drehachse des Exzenters geneigten Bohrung von Vorteil. Nach der Aufnahme eines Bereiches des Gegenstandes in die Aufnahmenut der Befestigungsvorrichtung wirkt das Gewicht des Gegenstandes auf den Exzenter, so dass dieser nur unter erhöhtem Kraftaufwand verdreht werden kann. Durch das Einbringen eines Hebels kann die erforderliche Kraft leicht aufgebracht werden. Auf diese Art kann die Lage des Abschnitts der Aufnahmenut, in der der Bereich des Gegenstandes aufgenommen ist und damit die des Gegenstandes leichter verändert werden.

Erfindungsgemäß ist eine Befestigungsvorrichtung vorgeschlagen, bei der die Befestigungsvorrichtung eine Kappe aufweist, die form- und/oder kraftschlüssig an dem Exzenter befestigbar ist. Die Kappe wird über den Exzenter gestülpt, so dass der Exzenter von außen nicht mehr zugänglich ist. Die Kappe weist daher vorteilhafterweise die Form eines kegelstumpfförmigen Behälters auf. Die Kappe kann aber auch anders ausgebildet sein. Nach der Befestigung der Kappe an dem Exzenter liegt die Kappe bevorzugt mit der offenen Stirnseite zumindest teilweise an dem befestigten Bereich des Gegenstandes an. Die Kappe kann formschlüssig an dem Exzenter befestigt sein. Der Formschluss kann durch wenigstens ein Rastelement an der Innenmantelfläche der Kappe erfolgen. Das Rastelement hintergreift oder greift in einen Vorsprung, eine Vertiefung, eine Nut oder eine Hinterschneidung an der Außenmantelfläche des Exzenters ein. Das Rastelement kann dabei radial umlaufend an der Innenmantelfläche der Kappe ausgebildet sein. Es ist aber auch denkbar, dass mehrere Rastelemente an der Innenmantelfläche der Kappe vorgesehen sind, die in entsprechend mehrere Vertiefungen, Nute, Vorsprünge und/oder Hinterschneidungen an der Außenmantelfläche des Exzenters eingreifen. Hierdurch wird verhindert, dass die Kappe von dem Exzenter entfernt werden kann beziehungsweise von dieser herab fällt. Die Kappe schützt den Exzenter und verstärkt die Befestigung des Gegenstandes an der Grundfläche. Der Vorsprung, die Vertiefung, die Nut oder die Hinterschneidung an der Außenmantelfläche des Exzenters dienen ferner, vor der Fixierung der Kappe an dem Exzenter, zur Absicherung des Einhängeprozesses. D.h., wird der Gegenstand nicht richtig in die Aufnahmenut eingeführt, so hindert der der Vorsprung, die Vertiefung, die Nut oder die Hinterschneidung an der Außenmantelfläche des Exzenters ein Abrutschen des Gegenstandes.

Durch die an der Außenmantelfläche des Exzenters vorgesehenen Vorsprünge, Vertiefungen, Nuten oder Hinterschneidungen wird neben einer Befestigungsmöglichkeit für die Kappe auch ein Fangschutz beim Einhängen des Gegenstandes in die Aufnahmenut geschaffen. Liegt der Bereich des Gegenstandes nicht zuverlässig in der Aufnahmenut ein und wird der Gegenstand von dem Monteur losgelassen, so würde bei einer glatten Außenmantelfläche des Exzenters der Gegenstand an dem Exzenter, der vorzugsweise kegelstumpfförmig ist abgleiten. Durch das Vorsehen von vorzugsweise umlaufenden Rippen oder Nuten kann dies verhindert werden.

Zusätzlich ist die Kappe so ausgestaltet, dass diese im auf den Exzenter aufgebrachten Zustand zumindest teilweise an dem Bereich des Gegenstandes anliegt und damit einen Kraftschluss mit dem Berech des Gegenstandes bildet. Durch das Anliegen der Kappe an dem befestigten Bereich des Gegenstandes, welcher in der Aufnahmenut gehalten ist, wird dieser zusätzlich in der Aufnahmenut fixiert. Der Bereich des Gegenstandes kann beispielsweise die Rückwand eines Dunstabzugsgehäuses sein.

Bevorzugt ist des Weiteren eine Befestigungsvorrichtung, bei der die Kappe an ihrem offenen Ende zumindest bereichsweise abgewinkelt angeordnete Schenkelelemente aufweist, wobei diese zur Mittelachse der Kappe und/oder von der Mittelachse der Kappe ausgerichtet, insbesondere senkrecht zur Mittelachse der Kappe ausgerichtet, sind. Diese zumindest bereichsweise abgewinkelt angeordneten Schenkelelemente können in Bereiche der Aufnahmenut eingeführt werden, die nicht durch den eingeführten Bereich des Gegenstandes ausgefüllt sind. Dies sind insbesondere der seitliche Bereich der Aufnahmenut und/oder der Bereich der Aufnahmenut unterhalb des Dorns. Andere abgewinkelt angeordnete Schenkelelemente, insbesondere nach außen abgewinkelte Schenkelemente, liegen an dem befestigten Bereich des Gegenstandes an. Durch den Eingriff und das Anliegen der abgewinkelt angeordneten Schenkelelemente kann das in der Aufnahmenut befestigte Teil des Gegenstands zusätzlich form- und/oder kraftschlüssig an dem Exzenter befestigt werden und ein Verdrehen des Exzenters zusätzlich verhindert werden. Diese Befestigung stellt zudem einen Aushängeschutz für den Bereich des Gegenstands an der Aufnahmenut dar.

Der Exzenter der Befestigungsvorrichtung weist bevorzugt an der Außenmantelfläche Rändelungen auf. Hierdurch kann der Exzenter besser manuell gedreht werden, um den eingehängten Gegenstand vertikal auszurichten. Die Rändelungen, die insbesondere an der Außenseite des Exzenters vorgesehene, beispielsweise axial verlaufende Nuten oder Vertiefungen bilden, bieten einen festeren Griff beim Greifen des Exzenters.

Auch an der Innenmantelfläche der Kappe sind bevorzugt Rändelungen vorgesehen. Diese sind vorzugsweise mit den Rändelungen des Exzenters ausgerichtet und greifen bei dem Befestigen der Kappe in die Rändelungen an der Außenmantelfläche des Exzenters ein. Hierdurch wird die Kappe beim Aufstecken sicher geführt, bis die Rastelemente der Kappe in entsprechende Vertiefungen, Nute etc. an dem Exzenter einrasten.

Bevorzugt ist ferner eine Befestigungsvorrichtung, bei der die Kappe Aussparungen aufweist, insbesondere im Bereich der Rastelemente. Hierdurch können durch Einführung eines Hebelwerkzeuges die Rastelemente, die bevorzugt federelastisch ausgebildet sind, aus den Vertiefungen, Nuten oder Hinterscheidungen des Exzenters entfernt werden, um so die Kappe von dem Exzenter zu entfernen. Die Kappe ist vorzugsweise aus Kunststoff hergestellt.

Gemäß eines zweiten Aspektes der Erfindung wird die Aufgabe durch die Verwendung wenigstens einer zuvor beschriebenen Befestigungsvorrichtung zur Befestigung einer Rückwand eines Dunstabzugsgehäuses einer Dunstabzugshaube an eine Grundfläche gelöst, wobei die Rückwand des Dunstabzugsgehäuses zumindest eine Aussparung zur Hindurchführung des Doms und des Exzenters aufweist.

Durch zwei derartige Befestigungsvorrichtungen kann die Rückwand eines Dunstabzugsgehäuses einer Dunstabzugshaube einfach und sicher an einer Wand befestigt werden. Die Rückwand weist zur Befestigung an den Befestigungsvorrichtungen zwei Aussparungen auf. Nach der Befestigung der Befestigungsvorrichtungen an der Wand, wobei die Befestigungsvorrichtungen in etwa der gleichen Höhe an der Wand und in einem Abstand, der dem Abstand der beiden Aussparungen entspricht, befestigt werden, werden die zwei Aussparungen der Rückwand über die Befestigungsvorrichtungen geschoben und in den jeweiligen Aufnahmenuten der beiden Befestigungsvorrichtungen eingehackt. Die Rückwand sitzt an den Kanten der Aussparungen, insbesondere mit der Oberkante der Aussparung, formschlüssig in den Aufnahmenuten der Befestigungsvorrichtungen. Zur vertikalen Ausrichtung der Rückwand und damit des Dunstabzugsgehäuses der Dunstabzugshaube können die Exzenter um die jeweils darin vorgesehenen Dorne gedreht werden, bis das Dunstabzugsgehäuse waagerecht an der Wand angeordnet ist. Nach der vertikalen Ausrichtung kann das Dunstabzugsgehäuse je nach Größe der Aussparungen horizontal verschoben werden, bis auch hier die perfekte Position gefunden ist. Aufgrund des vorzugsweise zwischen dem Dorn und dem Exzenter bestehenden Reibschlusses, bleiben die Exzenter auch während der horizontalen Justierung des Dunstabzugsgehäuses in der ursprünglich eingestellten verdrehten Position. Danach werden über jeden Exzenter Kappen aufgesteckt, die eine Drehung des Exzenters zusätzlich unterdrücken und die Rückwand in den Aufnahmenuten zusätzlich fixieren. Hierdurch kann die Rückwand nicht mehr aus der Befestigung in den Aufnahmenuten entfernt werden.

Die Befestigungsvorrichtungen sorgen für einen sicheren Halt des Dunstabzugsgehäuses der Dunstabzugshaube an der Wand. Die Befestigung ist sehr einfach, da die Befestigung des Dunstabzugsgehäuses der Dunstabzugshaube an den Befestigungsvorrichtungen ohne Werkzeug erfolgen kann. Die vertikale Ausrichtung der Exzenter erfolgt durch manuelles oder durch ein Hebelwerkzeug, wie einen Schraubenzieher, unterstütztes Drehen der Exzenter. Zur Entfernung des Dunstabzugsgehäuses von den Befestigungsvorrichtungen werden zunächst die Kappen von den Befestigungsvorrichtungen gelöst. Danach kann das Dunstabzugsgehäuse einfach vertikal aus den Aufnahmenuten gehoben werden und horizontal über die Befestigungsvorrichtungen entfernt werden.

Die Erfindung wird im Folgenden anhand der beiliegenden Zeichnungen, die mögliche Ausführungsformen der Erfindung darstellen, beschrieben. Es zeigen:
- Figur 1:: eine Frontansicht eines Bereiches eines Gegenstandes, welcher an einer Befestigungsvorrichtung befestigt ist,
- Figur 2:: eine perspektivische Ansicht eines Bereiches eines Gegenstandes, welcher an einer Befestigungsvorrichtung befestigt ist;
- Figur 3:: eine Seitenansicht eines Exzenters mit Grundplatte einer Befestigungsvorrichtung;
- Figur 4:: eine Schnittdarstellung durch eine Befestigungsvorrichtung;
- Figur 5:: eine Seitenansicht eines an einer Befestigungsvorrichtung befestigten Bereiches eines Gegenstandes;
und
- Figur 6:: eine perspektivische Ansicht auf ein an zwei Befestigungsvorrichtungen befestigtes Dunstabzugsgehäuse

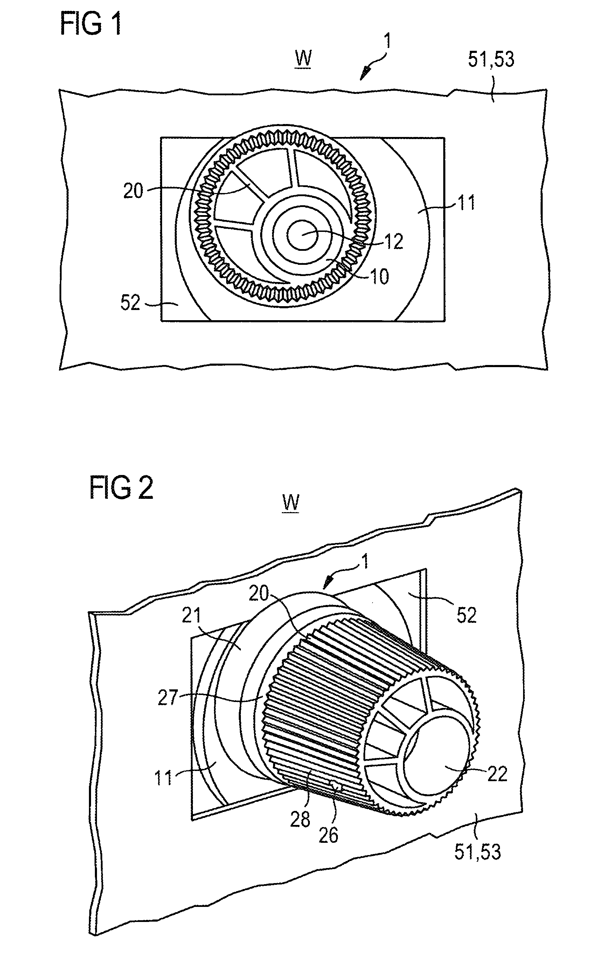

Die Figur 1 zeigt eine perspektivische Ansicht eines Bereiches 53 eines Gegenstandes, hier eine Rückwand 51 eines Dunstabzugsgehäuses, welcher an einer Befestigungsvorrichtung 1 befestigt ist. Die Befestigungsvorrichtung 1 weist einen Dorn 10 auf, der einen Durchlass 12 zur Befestigung des Doms 10 an einer Grundfläche W, beispielsweise einer Wand, aufweist. Der Dorn 10 weist ferner eine Grundplatte 11 auf, die zur Befestigung an der Grundfläche angelegt wird. Der Dorn 10 steht bevorzugt senkrecht aus der Grundplatte 11 heraus. In dem Dorn 10 ist ein Durchlass 12 vorgesehen, der damit von der Vorderseite der Befestigungsvorrichtung 1 einen Durchgriff einer Befestigungsschraube (nicht dargestellt) bis zu der Grundfläche W erlaubt. An dem Dorn 10 ist ein Exzenter 20 drehbar gelagert. Der Exzenter 20 ist dabei derart an dem Dorn 10 reibschlüssig angeordnet, dass dieser nur unter erhöhtem Kraftaufwand um den Dorn 10 gedreht werden kann. Dabei kann der Exzenter 20 manuell gedreht werden. Die Rückwand 51 des Dunstabzugsgehäuses weist eine Aussparung 52 auf, die eine Höhe und eine Breite aufweist, die größer sind als der Durchmesser des Exzenters 20 an der Seite, an der der Exzenter 20 der Grundplatte 11 zugewandt ist. Durch die Aussparung 52 der Rückwand 51 kann der Exzenter 20 hindurchgeführt werden, bis die obere Kante der Aussparung 52 in einer in dieser Figur nicht dargestellten Aufnahmenut 30 befestigt wird.

Nach dem Einhängen der Rückwand 51 kann diese durch eine Drehung des Exzenters 20 vertikal verschoben werden. D.h., der Exzenter 20 ermöglicht durch eine Drehung die vertikale Ausrichtung der befestigten Rückwand 51. Die Mittelachse des Exzenters 20 liegt achsparallel beabstandet von der Drehachse des Exzenters 20. Hierdurch kann bei einer Drehung des Exzenters 20 die gebildete Aufnahmenut 30 in deren zu der Oberkante der Aussparung 52 gerichteten Abschnitt herabgesenkt oder angehoben werden, um somit die Rückwand 51 auszurichten.

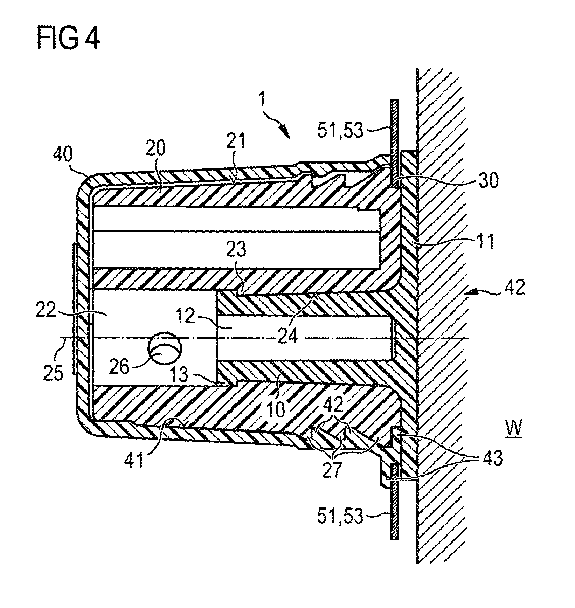

In der Figur 2 ist der Exzenter 20 in perspektivischer Ansicht gezeigt. Hierbei erkennt man auch den Durchlass 22 des Exzenters 20. Der Exzenter 20 weist an der Außenmantelfläche 21 Rändelungen 28 auf, die einen besseren Halt beim Greifen des Exzenters 20 bieten. Die Rändelungen 28 dienen ferner zum Führen einer aufschiebbaren Kappe (siehe Figur 4), die an der Innenmantelfläche 41 ebenfalls entsprechende Rändelungen aufweist. Des Weiteren dienen die Rändelungen 28 an der Außenmantelfläche 21 des Exzenters 20 dazu, um die Kappe 40 verdrehsicher an dem Exzenter 20 zu halten. An der Außenmantelfläche 21 des Exzenters 20 sind ferner radial umlaufende Vorsprünge beziehungsweise Rippen 27 dargestellt. Diese befinden sich in dem Bereich des Exzenters 20, der der Grundplatte 11 des Dorns 10 zugewandt ist. Die Vorsprünge 27 dienen zur Fixierung der in Figur 4 dargestellten Kappe 40 an den Exzenter 20. Die Vorsprünge 27 müssen nicht zwangsläufig um den gesamten Umfang der Außenmantelfläche 21 des Exzenters 20 verlaufen. Sie können auch vereinzelt entlang des Umfangs der Außenmantelfläche 21 des Exzenters 20 vorgesehen sein. Ferner können anstatt der Vorsprünge 27 Vertiefungen, Nute und/oder Hinterschneidungen vorgesehen sein. Der Vorsprung 27 oder eine Vertiefung, eine Nut oder eine Hinterschneidung an der Außenmantelfläche 21 des Exzenters 20 dienen ferner, vor der Fixierung der Kappe 40 an dem Exzenter 20, zur Absicherung des Einhängeprozesses. D.h., wird die Rückwand 51 eines Dunstabzugsgehäuses 50 nicht richtig in die Aufnahmenut 30 eingeführt, so hindert der Vorsprung 27 bzw. alternativ eine Vertiefung, eine Nut oder eine Hinterschneidung an der Außenmantelfläche 21 des Exzenters 20 ein Abrutschen des Dunstabzugsgehäuses 50. Der Exzenter 20 weist ferner eine Bohrung 26, insbesondere Querbohrung, auf, die als Aufnahme für einen Hebel zum Drehen des Exzenters 20 dienen kann. So kann in die Bohrung 26 beispielsweise als Hebel ein Schraubenzieher eingeführt werden, der die Drehung des Exzenters 20 um den Dorn 10 erleichtert.

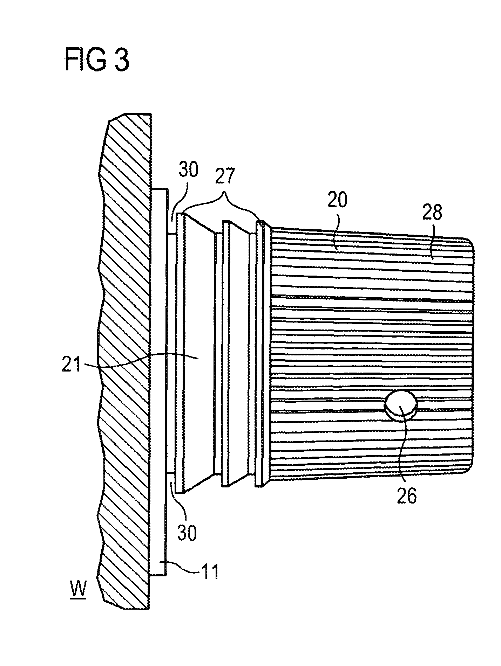

Die Figur 3 zeigt eine Seitenansicht auf eine Befestigungsvorrichtung 1. Der Exzenter 20 sitzt verdrehbar auf dem Dorn 10, dessen Grundplatte 11 sichtbar ist. Der Exzenter 20 hat an der Außenmantelfläche 21 Rändelungen 28, die einen besseren Halt beim Greifen des Exzenters 20 bieten. Diese Ansicht zeigt ferner die Bohrung 26, die als Aufnahme für einen Hebel zum Drehen des Exzenters 20 dient. An der Außenmantelfläche 21 des Exzenters 20 sind drei entlang des Umfangs der Außenmantelfläche 21 radial umlaufende Vorsprünge 27 gezeigt, die zur Aufnahme von Rastelementen 42 einer aufsteckbaren Kappe 40 (Figur 4) dienen. An ihrem zur Grundplatte 11 des Dorns 10 zugewandten Bereich weist die Außenmantelfläche 21 des Exzenters 20 eine Vertiefung beziehungsweise Kante auf, die zusammen mit der Grundplatte 11 des Doms 10 die Aufnahmenut 30 bildet. Die Aufnahmenut 30 wird somit durch einen Teil, insbesondere eine Stirnfläche der Außenmantelfläche 21 des Exzenters 20 und einen Teil der Grundplatte 11 des Doms 10 gebildet. Den Boden der Aufnahmenut 30 bildet ein parallel zur Längsachse des Exzenters 20 verlaufender Teil der Außenmantelfläche 21 des Exzenters 20. In die Aufnahmenut 30 kann der nicht dargestellte Bereich 53 des Gegenstandes, beispielsweise eine Rückwand 51 eines Dunstabzugsgehäuses eingeführt und befestigt werden.

Die Figur 4 zeigt einen Schnitt durch eine Befestigungsvorrichtung 1. Die Drehachse 25 des Exzenters 20 liegt koaxial zur Längsachse des Dorns 10. Der Durchlass 12 verläuft ebenfalls koaxial zu der Längsachse des Doms 10. Der Exzenter 20 weist einen fluchtend zum Durchlass 12 des Doms 10 angeordneten Durchlass 22 auf. In die Grundfläche W wird ein Dübel zur Aufnahme einer Befestigungsschraube (nicht dargestellt), die durch den Durchlass 22 des Exzenters 20 und den Durchlass 12 des Dorns 10 in den Dübel eingeschraubt wird, eingesetzt. Der Dorn 10 weist eine Grundplatte 11 sowie einen Durchlass 12 auf. Ferner weist der Dorn 10 an dem der Grundplatte 11 abgewandten Ende einen Rastvorsprung 13 zum formschlüssigen Hintergreifen wenigstens einer Kante 23 an einer Innenmantelfläche 24 des Exzenters 20 auf. Eine axiale Verschiebung des Exzenters 20 an dem Dorn 10 wird einerseits durch den Rastvorsprung 13 und andererseits durch die Grundplatte 11 des Doms 10 verhindert. D.h., der Exzenter 20 liegt formschlüssig zwischen dem Rastvorsprung 13 und der Grundplatte 11 des Doms 10 ein.

Die Mittellinie des Exzenters 20 verläuft beabstandet parallel zu der Drehachse 25 des Exzenters 20. Hierdurch kann bei einer Drehung des Exzenters 20 die Aufnahmenut 30, insbesondere der obere Abschnitt der Aufnahmenut 30 in der vertikaler Position variiert werden. An ihrem zur Grundplatte 11 des Dorns 10 zugewandten Bereich weist die Außenmantelfläche 21 des Exzenters 20 eine Vertiefung auf, die zusammen mit der Grundplatte 11 des Dorns 10 die Aufnahmenut 30 bildet.

In die Aufnahmenut 30 wird die Rückwand 51 eingeführt und dort befestigt.

An der Außenmantelfläche 21 des Exzenters 20 sind Vorsprünge 27 vorgesehen, die Rastelemente 42, die an der Innenmantelfläche 41 einer aufgesteckten Kappe 40 angeordnet sind, form- und/oder kraftschlüssig aufnehmen. An dem offenen Ende 42 der Kappe 40 sind Schenkelelemente 43 vorgesehen, die bereichsweise an der Rückwand 51 anliegen und zum Teil in die Aufnahmenut 30 eingreifen. An dem in Figur 4 unteren Bereich der Kappe 40 ist sowohl ein nach außen über die Kappe 40 als auch ein ins innere der Kappe 40 geneigtes Schenkelelement 43 vorgesehen. Das nach außen gerichtete Schenkelelement 43 liegt an der Vorderseite des Bereiches 53 an, das heißt steht nach unten über die Aussparung 52 über. Das nach innen gerichtete Schenkelelement 43 greift in den unteren Abschnitt der Aufnahmenut 30 ein. Hierdurch wird die Rückwand 51 des Dunstabzugsgehäuses 50 in der Aufnahmenut 30 gesichert, so dass diese fest an der Befestigungsvorrichtung 1 fixiert ist. Ein leichtes Spiel kann beim Einliegen der Rückwand 51 in der Aufnahmenut 30 vorhanden bleiben, die Schwerkraft zieht das Dunstabzugsgehäuse 50 aber fest in die Aufnahmenut 30.

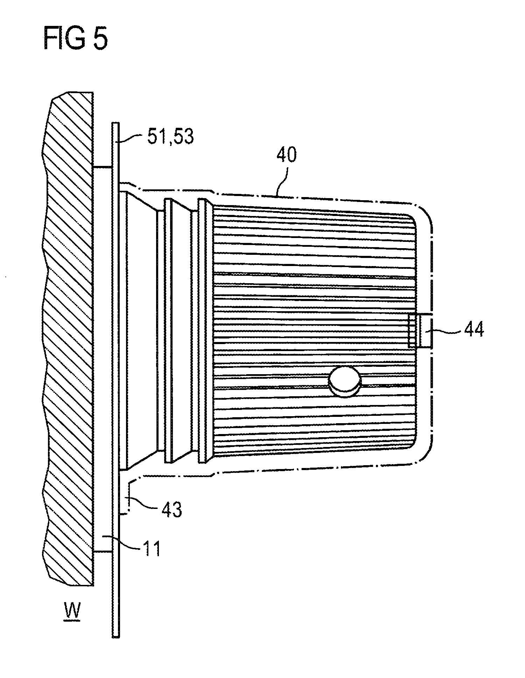

Die Rückwand 51, insbesondere die Oberkante der Aussparung 52 der Rückwand 51 ist in die Aufnahmenut 30 einführbar. Durch das Gewicht der Rückwand 51 sitzt diese fest in der Aufnahmenut 30 ein. Nach dem Einführen der Rückwand 51 in die Aufnahmenut 30 wird die Kappe 40 an dem Exzenter 20 fixiert. Die Kappe 40 ist dabei bevorzugt derart ausgebildet, dass sie formschlüssig bzw. annähernd formschlüssig auf den Exzenter 20 geschoben werden kann. Das offene Ende 42 bzw. die Stirnseite des offenen Endes 42 der Kappe 40 sitzt nach der Befestigung an dem Exzenter 20 teilweise an der Rückwand 51 des Dunstabzugsgehäuses an. Dabei greifen Schenkelelemente 43, die an dem offenen Ende 42 der Kappe 40 angeordnet sind, zum Teil in die Aussparung 52 der Rückwand 51 und zum Teil in die Aufnahmenut 30 ein und sichern somit die Rückwand 51 des Dunstabzugsgehäuses an der Befestigungsvorrichtung 1. An der Innenmantelfläche 41 der Kappe 40 können Rastelemente 42 vorgesehen sein, die an den radial umlaufenden Vorsprüngen 27 an der Außenmantelfläche 21 des Exzenters 20 verrastet werden. In Figur 5 ist ein an der Befestigungsvorrichtung 1 befestigter Bereich 53 der Rückwand 51 gezeigt. In dieser Ansicht ist auch eine Aussparungen 44 zu erkennen, durch die an der Innenmantelfläche 41 der Kappe 40 angeordnete Rastelemente 42 gelöst werden können.

Die Kappe 40 fixiert die Rückwand 51 in der Aufnahmenut 30 der Befestigungsvorrichtung 1. Die Rückwand 51 sitzt fest in der Aufnahmenut 30, die durch den Exzenter 20 und die Grundplatte 11 des Dorns 10 gebildet wird. Nach der Befestigung der Kappe 40 an dem Exzenter 20 kann die Rückwand 51 nicht vertikal bewegt werden. Nach dem Aufstecken der Kappe 40 kann der Exzenter 20 zudem nicht mehr gedreht werden. Die Kappe 40 bildet einen Aushängeschutz für die Rückwand 51 und einen zusätzlichen Verdrehschutz für den Exzenter 20. Ferner wird eine horizontale Verschiebung des Dunstabzugsgehäuses 50 entlang der Aufnahmenut 30 durch die Schwerkraft des Dunstabzugsgehäuses 50 sowie durch die Reibung zwischen dem Dunstabzugsgehäuse 50 und der Aufnahmenut 30 und/oder der Grundfläche W erschwert.

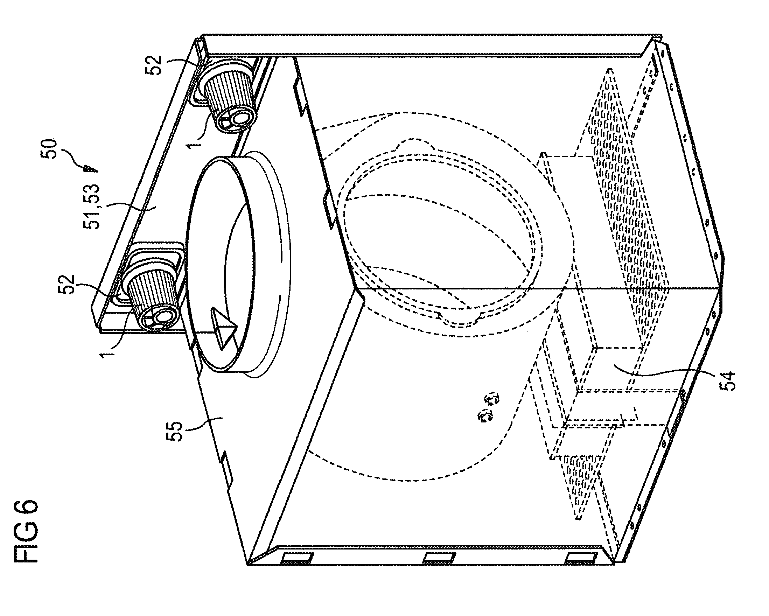

Die Figur 6 zeigt eine perspektivische Ansicht auf ein Dunstabzugsgehäuse 50, welches eine Rückwand 51 mit zwei Aussparungen 52 aufweist. Die Aussparungen 52 in der Rückwand 51 sind bevorzugt auf der gleichen Höhe in der Rückwand 51 angeordnet. Zur Befestigung des Dunstabzugsgehäuses 50 an einer Grundfläche W, wie einer Zimmerwand, werden zunächst der Dorn 10 und der an dem Dorn 10 verdrehbar gelagerte Exzenter 20 mittels einer Befestigungsschraube an der Grundfläche W befestigt. Dies ist das einzige mal, dass ein Werkzeug benötigt wird. Danach wird die Rückwand 51 des Dunstabzugsgehäuses 50 durch die Aussparungen 52 auf die beiden Exzenter 20 geschoben bis die Rückwand 51 in die Aufnahmenute 30 der beiden Befestigungsvorrichtungen 1 eingeführt sind. Zur horizontal Ausrichtung des Dunstabzugsgehäuses 50 kann dieses aufgrund der Breite der Aussparungen 52, die größer als der Durchmesser des Exzenters 20 ist, horizontal entlang den Aufnahmenuten 30 verschoben werden. Zur vertikalen Ausrichtung des Dunstabzugsgehäuses 50 können die Exzenter 20 der beiden Befestigungsvorrichtungen 1 gedreht werden. Nach der Ausrichtung des Dunstabzugsgehäuses 50 werden die Kappen 40 auf die Exzenter 20 der beiden Befestigungsvorrichtungen 1 gesteckt und durch die Rastelemente 42 an der Kappe 40 dort befestigt. Ein Entfernen des Dunstabzugsgehäuses 50 ist damit nicht mehr möglich. Nur durch Entfernen der Kappen 40 kann das Dunstabzugsgehäuse 50 aus der Befestigung gelöst werden.

## Patentansprüche

1. Befestigungsvorrichtung zur Befestigung eines Dunstabzugsgehäuses einer Dunstabzugshaube an einer Grundfläche, wobei die Befestigungsvorrichtung (1) einen Dorn (10) zur Befestigung an der Grundfläche, einen Exzenter (20), der verdrehbar an dem Dorn (10) angeordnet ist, und eine Aufnahmenut (30) zur Aufnahme wenigstens einer Rückwand (51) der Dunstabzugshaube, welche Aufnahmenut (30) zumindest bereichsweise durch die Außenmantelfläche (21) des Exzenters (20) gebildet ist, aufweist, **dadurch gekennzeichnet**, die Befestigungsvorrichtung (1) eine Kappe (40) aufweist, die form- und/oder kraftschlüssig an dem Exzenter (20) befestigbar ist, wobei die Kappe (40) einen Aushängeschutz für die Rückwand (51) und einen Verdrehschutz für den Exzenter (20) bildet.

2. Befestigungsvorrichtung nach Anspruch 1, **dadurch gekennzeichnet, dass** die Aufnahmenut (30) in der Außenmantelfläche (21) des Exzenters (20) über zumindest einen Bereich des Umfangs vorgesehen ist.

3. Befestigungsvorrichtung nach Anspruch 1, **dadurch gekennzeichnet, dass** der Dorn (10) eine Grundplatte (11) aufweist, die zusammen mit zumindest einem Bereich der Außenmantelfläche (21) des Exzenters (20) die Aufnahmenut (30) bildet.

4. Befestigungsvorrichtung nach einem der Ansprüche 1 bis 3, **dadurch gekennzeichnet, dass** der Dorn (10) und der Exzenter (20) jeweils einen Durchlass (12, 22) zur Hindurchführung einer Befestigungsschraube aufweisen.

5. Befestigungsvorrichtung nach einem der Ansprüche 1 bis 4, **dadurch gekennzeichnet, dass** der Dorn (10) wenigstens einen Rastvorsprung (13) zum formschlüssigen Hintergreifen wenigstens einer Kante (23) an der Innenmantelfläche (24) des Exzenters (20) aufweist.

6. Befestigungsvorrichtung nach einem der Ansprüche 1 bis 5, **dadurch gekennzeichnet, dass** die Außenmantelfläche (21) des Exzenters (20) kegelstumpfförmig aufgebildet ist.

7. Befestigungsvorrichtung nach einem der Ansprüche 1 bis 6, **dadurch gekennzeichnet, dass** der Exzenter (20) wenigstens eine geneigt, insbesondere senkrecht, zur Drehachse (25) des Exzenters (20) verlaufende Bohrung (26) aufweist.

8. Befestigungsvorrichtung nach einem der Ansprüche 1 bis 7, **dadurch gekennzeichnet, dass** die Kappe (40) die Form eines kegelstumpfförmigen Behälters aufweist.

9. Befestigungsvorrichtung nach einem der Ansprüche 1 bis 8, **dadurch gekennzeichnet, dass** an der Innenmantelfläche (41) der Kappe (40) zumindest ein Rastelement (42) zum Eingriff in Vorsprünge, Vertiefungen, Nute und/oder Hinterschneidungen (27) an der Außenmantelfläche (21) des Exzenters (20) vorgesehen ist.

10. Befestigungsvorrichtung nach einem der Ansprüche 1 bis 9, **dadurch gekennzeichnet, dass** die Kappe (40) an ihrem offenen Ende (42) zumindest bereichsweise abgewinkelt angeordnete Schenkelelemente (43) aufweist, wobei diese zur Mittelachse der Kappe (40) und/oder von der Mittelachse der Kappe (40) weg gerichtet, insbesondere senkrecht zur Mittelachse der Kappe (40) ausgerichtet, sind.

11. Befestigungsvorrichtung nach einem der Ansprüche 1 bis 10, **dadurch gekennzeichnet, dass** der Exzenter (20) an der Außenmantelfläche (21) Rändelungen (28) aufweist.

12. Befestigungsvorrichtung nach einem der Ansprüche 1 bis 11, **dadurch gekennzeichnet, dass** die Kappe (40) an der Innenmantelfläche (41) Rändelungen aufweist.

13. Verwendung wenigstens einer Befestigungsvorrichtung nach einem der Ansprüche 1 bis 12 zur Befestigung einer Rückwand (51) eines Dunstabzugsgehäuses (50) einer Dunstabzugshaube an eine Grundfläche, wobei die Rückwand (51) des Dunstabzugsgehäuses (50) zumindest eine Aussparung (52) zur Hindurchführung des Doms (10) und des Exzenters (20) aufweist.

## Claims

1. Fastening device for fastening a fume extractor housing of a fume extractor hood to a base surface, wherein the fastening device (1) comprises a mandrel (10) for fastening to the base surface, an eccentric (20) rotatably arranged at the mandrel (10) and a receiving groove (30) for receiving at least one rear wall (51) of the fume extractor hood, which receiving groove (30) is formed at least regionally by the outer circumferential surface (21) of the eccentric (20), **characterised in that** the fastening device (1) comprises a cap (40) which is fastenable mechanically positively and/or by friction couple to the eccentric (20), wherein the cap (40) forms a demounting protection for the rear wall (51) and an anti-twist protection for the eccentric (20).

2. Fastening device according to claim 1, **characterised in that** the receiving groove (30) in the outer circumferential surface (21) of the eccentric (20) is provided over at least a region of the circumference.

3. Fastening device according to claim 1, **characterised in that** the mandrel (10) has a base plate (11) which together with at least one region of the outer circumferential surface (21) of the eccentric (20) forms the receiving groove (30).

4. Fastening device according to any one of claims 1 to 3, **characterised in that** the mandrel (10) and the eccentric (20) each have a passage (12, 22) for guidance through of a fastening screw.

5. Fastening device according to any one of claims 1 to 4, **characterised in that** the mandrel (10) has at least one detent projection (13) for mechanically positive engagement behind at least one edge (23) at the inner circumferential surface (24) of the eccentric (20).

6. Fastening device according to any one of claims 1 to 5, **characterised in that** the outer circumferential surface (21) of the eccentric (20) is of frusto-conical construction.

7. Fastening device according to any one of claims 1 to 6, **characterised in that** the eccentric (20) comprises at least one bore (26) extending at an angle, particularly perpendicularly, to the axis (25) of rotation of the eccentric (20).

8. Fastening device according to any one of claims 1 to 7, **characterised in that** the cap (40) has the form of a frusto-conical container.

9. Fastening device according to any one of claims 1 to 8, **characterised in that** at least one detent element (42) for engagement in projections, recesses, grooves and/or undercuts (27) at the outer circumferential surface (21) of the eccentric (20) is provided at the inner circumferential surface (41) of the cap (40).

10. Fastening device according to any one of claims 1 to 9, **characterised in that** the cap (40) has at its open end (42) leg elements (43) arranged to be bent over at least regionally, wherein these are oriented towards the centre axis of the cap (40) and/or away from the centre axis of the cap (40), particularly oriented perpendicularly with respect to the centre axis of the cap (40).

11. Fastening device according to any one of claims 1 to 10, **characterised in that** the eccentric (20) has knurlings (28) at the outer circumferential surface (21).

12. Fastening device according to any one of claims 1 to 11, **characterised in that** the cap (40) has knurlings at the inner circumferential surface (41).

13. Use of at least one fastening device according to any one of claims 1 to 12 for fastening a rear wall (51) of a fume extractor housing (50) of a fume extractor hood to a base surface, wherein the rear wall (51) of the fume extractor housing (50) has at least one cut-out (52) for guidance through of the mandrel (10) and the eccentric (20).

## Revendications

1. Dispositif de fixation pour la fixation d'une enveloppe de conduit d'évacuation d'une hotte aspirante sur une surface de base, le dispositif de fixation (1) comprenant un mandrin (10) pour la fixation sur la surface de base, un excentrique (20) qui est placé sur le mandrin (10) d'une manière permettant une torsion et une rainure de réception (30) pour la réception d'au moins une paroi postérieure (51) de la hotte aspirante, laquelle rainure de réception (30) est formée, au moins par endroits, par la surface périphérique extérieure (21) de l'excentrique (20), **caractérisé en ce que** le dispositif de fixation (1) comprend un capuchon (40) qui peut être fixé sur l'excentrique (20) par conjugaison de forme et/ou par adhérence, le capuchon (40) formant une protection contre un décrochage de la paroi postérieure (51) et une protection contre une torsion de l'excentrique (20).

2. Dispositif de fixation selon la revendication 1, **caractérisé en ce que** la rainure de réception (30) est prévue dans la surface périphérique extérieure (21) de l'excentrique (20) sur au moins une zone de la circonférence.

3. Dispositif de fixation selon la revendication 1, **caractérisé en ce que** le mandrin (10) comprend une plaque de base (11) qui, avec au moins une zone de la surface périphérique extérieure (21) de l'excentrique (20), forme la rainure de réception (30).

4. Dispositif de fixation selon l'une des revendications 1 à 3, **caractérisé en ce que** le mandrin (10) et l'excentrique (20) sont pourvus chacun d'un passage (12, 22) permettant la traversée d'une vis de fixation.

5. Dispositif de fixation selon l'une des revendications 1 à 4, **caractérisé en ce que** le mandrin (10) est pourvu d'au moins une saillie d'encliquetage (13) destinée à saisir par l'arrière, par conjugaison de forme, au moins une arête (23) sur la surface périphérique intérieure (24) de l'excentrique (20).

6. Dispositif de fixation selon l'une des revendications 1 à 5, **caractérisé en ce que** la surface périphérique extérieure (21) de l'excentrique (20) est exécutée de manière à avoir la forme d'un cône tronqué.

7. Dispositif de fixation selon l'une des revendications 1 à 6, **caractérisé en ce que** l'excentrique (20) est pourvu d'au moins un alésage (26) qui s'étend de manière inclinée, notamment perpendiculaire, par rapport à l'axe de rotation (25) de l'excentrique (20).

8. Dispositif de fixation selon l'une des revendications 1 à 7, **caractérisée en ce que** le capuchon (40) a la forme d'un récipient en cône tronqué.

9. Dispositif de fixation selon l'une des revendications 1 à 8, **caractérisé en ce que** l'on prévoit, sur la surface périphérique intérieure (41) du capuchon (40), au moins un élément d'encliquetage (42) destiné à se mettre en prise avec des saillies, creux, rainures et/ou contre-dépouilles (27) sur la surface périphérique extérieure (21) de l'excentrique (20).

10. Dispositif de fixation selon l'une des revendications 1 à 9, **caractérisé en ce que** le capuchon (40) est pourvu, au niveau de son extrémité ouverte (42), d'éléments de branche coudés (43), au moins par endroits, ces éléments étant dirigés vers l'axe du capuchon (40) et/ou s'éloignant de l'axe du capuchon (40), notamment selon une orientation perpendiculaire à l'axe du capuchon (40).

11. Dispositif de fixation selon l'une des revendications 1 à 10, **caractérisé en ce que** l'excentrique (20) est pourvu de stries de moletage (28) sur sa surface périphérique extérieure (21).

12. Dispositif de fixation selon l'une des revendications 1 à 11, **caractérisé en ce que** le capuchon (40) est pourvu de stries de moletage sur sa surface périphérique intérieure (41).

13. Utilisation d'au moins un dispositif de fixation selon l'une des revendications 1 à 12 pour la fixation d'une paroi postérieure (51) d'une enveloppe de conduit d'évacuation (50) d'une hotte aspirante sur une surface de base, la paroi postérieure (51) de l'enveloppe de conduit d'évacuation (50) comportant au moins un évidement (52) pour permettre la traversée du mandrin (10) et de l'excentrique (20).
